# EUROPÄISCHE PATENTSCHRIFT

(11) **EP 3 932 835 B1**
(45) Veröffentlichungstag und Bekanntmachung des Hinweises auf die Patenterteilung: **26.04.2023**
(21) Anmeldenummer: 21182215.0
(22) Anmeldetag: 29.06.2021
(51) Int. Cl.: B65G 29/00, B65G 47/84

(54) **VORRICHTUNG ZUM HÖHENVERSTELLEN EINES TRANSPORTSTERNS UND BEHÄLTERBEHANDLUNGSVORRICHTUNG**
DEVICE FOR ADJUSTING THE HEIGHT OF A TRANSPORT STAR AND CONTAINER PROCESSING DEVICE
DISPOSITIF DE RÉGLAGE DE LA HAUTEUR D'UNE ÉTOILE DE TRANSPORT ET DISPOSITIF DE MANUTENTION DE RÉCIPIENTS

(30) Priorität: 29.06.2020 DE 102020117047
(43) Veröffentlichungstag der Anmeldung: 05.01.2022
(73) Patentinhaber: KRONES AG, 93073 Neutraubling (DE)
(72) Erfinder: Landler, Bruno, 93073 Neutraubling (DE)
(74) Vertreter: Nordmeyer, Philipp Werner

(56) Entgegenhaltungen:
- EP-A1- 3 239 078
- DE-C- 523 853
- SU-A2- 596 750
- US-A- 3 905 710
- US-A- 5 957 615

## Beschreibung

### Technisches Gebiet

Die vorliegende Erfindung betrifft eine Vorrichtung zum Höhenverstellen eines Transportsterns, beispielsweise eines Transportsterns eines Füllerkarussells oder eines Verschließerkarussells in einer Getränkeabfüllanlage, und ferner eine Behälterbehandlungsvorrichtung, wie etwa ein Behältertransportkarussell und/oder ein Füllkarussell oder ein Verschließerkarussell in einer Getränkeabfüllanlage.

### Stand der Technik

Getränkeabfüllanlagen können dazu ausgelegt sein, Behälter verschiedener Behältertypen befüllen zu können, beispielsweise Flaschen mit unterschiedlichem Aufnahmevolumen. Die Behältertypen unterscheiden sich hierbei insbesondere in deren Behälterhöhe. Um nach der Behandlung eines Behälters, etwa dem Befüllen oder dem Verschließen eines Behälters, eines ersten Typs die Behandlung eines Behälters eines weiteren Typs durchführen zu können, sind hierzu die Behandlungseinheiten der Behandlungsvorrichtungen auf die Höhe des neuen Behältertyps anzupassen. Mit anderen Worten muss eine Umrüstung der jeweiligen Getränkeabfüllanlage auf den jeweils zu behandelnden Behältertyp vorgenommen werden.

Behandlungsvorrichtungen in Rundläuferbauweise weisen in der Regel mindestens einen Transportstern auf, welcher um eine Transportsternachse herum rotiert. Für eine Höhenverstellung des Transportsterns zur Umrüstung der Getränkeabfüllanlage auf einen anderen Behältertyp muss der Transportstern entsprechend entlang der Sternachse verschoben werden.

Hier ist es bekannt, einen zentralen Bereich des Transportsterns - beispielsweise eine Transportsternwelle und eine darauf angeordnete Sternnabe mittels einer Passfederverbindung drehfest zu verbinden.

Um die Verschiebbarkeit des Transportsterns bei Änderung der Karussellhöhe zu gewährleisten, muss diese Welle-Nabe-Verbindung spielbehaftet sein. Dieses Spiel wiederum ist gleichzeitig auch nachteilig, da im Behälterbehandlungskarussell beispielsweise wechselnde und/oder schwellende Drehmomente übertragen werden müssen. Durch das Spiel tritt Verschleiß an der Welle-Nabe-Verbindung auf, welcher wiederum in zunehmendem Spiel resultieren kann. Dies kann sich wiederum nachteilig auf die Lebensdauer der Komponenten der Welle-Nabe-Verbindung sowie ebenfalls auf andere Teile des Behälterbehandlungskarussells auswirken.

Entsprechend sind verschiedene Ansätze bekannt, die Welle-Nabe-Verbindung zwischen einem Karusselloberteil und einem Karussellunterteil eines Behälterbehandlungskarussells zu verbessern. Die DE 35 38 060 A1 lehrt, eine Passfeder hohl auszubilden, den Hohlraum mittels axial eingeschraubter Verschlussteile abzudichten und mit einer hydraulischen Druckleitung zu verbinden. Um ein Spiel in der Passfeder-Verbindung zu erzielen, wird ein hydraulisches Druckmittel in die Passfeder eingeleitet, wodurch diese eine Längsdehnung erfährt. Aufgrund der Längsdehnung verringert sich die Breite der Passfeder. Dies bedingt einen aufwendigen Aufbau der Passfeder sowie eine eigens vorzusehenden Pneumatikzufuhr, wobei, um eine genügende Steifigkeit und Festigkeit zu erzielen, mit hohen Drücken gearbeitet werden muss.

Die DE 44 10 623 A1 schlägt vor, in die Nabe nahe deren Innenoberfläche eine Schraube einzuschrauben und dadurch Material der Nabe in Richtung Welle zu verdrängen, um so Spielfreiheit herzustellen. Die Nabe muss hierzu entweder aus einem entsprechend elastischen Material gefertigt sein, was sich negativ auf die Festigkeit und Vibrationsneigung auswirkt, oder aber der Bereich zwischen Schraube und Welle muss entsprechend dünnwandig ausgebildet sein, wodurch die Lebensdauer der Nabe reduziert sein kann.

Aus der KR101358004 B1 ist es bekannt, bei einem höhenverstellbaren Transferstern die Höhenposition mittels radial angeordneter Schrauben zu fixieren.

Eine weitere gattungsgemässe Vorrichtung ist aus der EP 3 239 078 A1 bekannt, welche den Oberbegriff des Anspruchs 1 zeigt.

Eine gängige herkömmliche Ausführung, zwischen Welle und Nabe einen spielfreien Zustand zu erhalten, ist die Verwendung eines Spannsatzes, wie beispielsweise der DE 2514313 A1 zu entnehmen. Beim Lösen des Spannsatzes kann die Synchronität zwischen Welle und Nabe jedoch verloren gehen. Mit anderen Worten kann ein Lösen des Spannsatzes darin resultieren, dass die Längsachse der Welle und die Längsachse der Nabe nicht mehr synchron beziehungsweise parallel zueinander orientiert sind. Eine solche Schiefstellung der Nabe relativ zur Welle kann bedingen, dass der Transportstern zur Rotationsachse um einen gewissen Winkel geneigt ist, so dass kein Planlauf erreicht wird. Demgemäß ist nach einem Festziehen des Spannsatzes erneut eine Justierung des Planlaufs des Transportsterns erforderlich, was zu einem erhöhten Rüstaufwand beim Umrüsten der Behälterbehandlungsvorrichtung führt.

### Darstellung der Erfindung

Ausgehend von dem bekannten Stand der Technik ist es eine Aufgabe der vorliegenden Erfindung, eine verbesserte Vorrichtung zum Höhenverstellen eines Transportsterns, bevorzugt eines Transportsterns eines Füllerkarussells oder eines Verschließerkarussells in einer Getränkeabfüllanlage, sowie eine verbesserte Behälterbehandlungsvorrichtung, bereitzustellen.

Die Aufgabe wird durch eine Vorrichtung zum Höhenverstellen eines Transportsterns, bevorzugt eines Transportsterns eines Füllerkarussells oder eines Verschließerkarussells in einer Getränkeabfüllanlage, mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Höhenverstellen eines Transportsterns, bevorzugt eines Transportsterns eines Füllerkarussells oder eines Verschließerkarussells in einer Getränkeabfüllanlage, vorgeschlagen, umfassend einen Wellenkörper und einen in Umfangsrichtung um den Wellenkörper angeordneten Nabenkörper, wobei der Wellenkörper und der Nabenkörper zum Höhenverstellen relativ zueinander entlang einer Längsachse des Wellenkörpers verschiebbar sind. Der Wellenkörper umfasst eine sich in Richtung der Längsachse erstreckende Nut, welche senkrecht zur Längsachse einen sich nach außen verjüngenden trapezförmigen Querschnitt aufweist, und in welcher ein Trapezkeil mit einem dazu korrespondierend verjüngenden Querschnitt in Richtung der Längsachse geführt ist, und wobei der Trapezkeil gegen die Nut mittels einer sich gegen den Nabenkörper abstützenden Passschraube verspannbar ist.

Dadurch, dass der Wellenkörper eine sich in Richtung der Längsachse erstreckende Nut umfasst, welche senkrecht zur Längsachse einen sich nach außen verjüngenden trapezförmigen Querschnitt aufweist, und in welcher ein Trapezkeil mit einem dazu korrespondierend verjüngenden Querschnitt in Richtung der Längsachse geführt ist, und wobei der Trapezkeil gegen die Nut mittels einer sich gegen den Nabenkörper abstützenden Passschraube verspannbar ist, kann auf ein separates Nachjustieren der Synchronität von Wellenkörper und Narbenkörper zueinander im Wesentlichen verzichtet werden.

Beim Festziehen der Passschraube, welches bevorzugt mit einem vorgegebenen Drehmoment erfolgt, wird der Trapezkeil in Bezug auf die Längsachse nach radial außen gezogen, so dass sich dieser mit seinen entsprechend des sich nach außen verjüngenden, trapezförmigen Querschnitts orientierten Seitenflächen gegen die korrespondierend ausgebildeten Seitenflächen der Nut angelegt. Durch die sich nach außen verjüngende, trapezförmige Form der Querschnitte von Trapezkeil und Nut kommt es beim Festziehen der Passschraube zu einem Zentrieren des Trapezkeils relativ zur Nut beziehungsweise in der Nut. Dies wiederum hat zur Folge, dass sich der Wellenkörper und der Nabenkörper zueinander zentrieren - mit anderen Worten sich also die Längsachse des Nabenkörpers parallel zur Längsachse des Wellenkörpers orientiert. Folglich sind der Wellenkörper und der Nabenkörper dann synchron zueinander orientiert, sodass der Nabenkörper durch das Lösen und erneute Verspannen der Passschraube beziehungsweise des Trapezkeils in der Nut keinen veränderten Höhenschlag aufweist, beziehungsweise im Wesentlichen den gleichen Planlauf aufweist, wie vor dem Lösen.

Mit anderen Worten ist durch den Trapezkeil und die Passschraube eine Passfedereinheit zum Verhindern einer Drehung des Wellenkörpers und des Nabenkörpers relativ zueinander ausgebildet, bei welchem bei einem Anziehen der Passschraube ein im Wesentlichen selbstständiges Zentrieren des Nabenkörpers relativ zum Wellenkörper erzielbar ist.

Vorzugsweise stützt sich die Passschraube zumindest nach radial innen gegen den Nabenkörper ab.

Zum Festziehen der Passschraube beziehungsweise zum Verspannen des Trapezkeils in der Nut via der Passschraube ist die Passschraube bevorzugt mit einem Gewinde, bevorzugt einem Feingewinde, im Trapezkeil in Eingriff, wobei das Gewinde im Trapezkeils bevorzugt in Bezug auf die Längsachse radial orientiert ist. Hierzu weist die Passschraube einen korrespondierend zum Gewinde im Trapezkeil ausgebildeten Gewindeabschnitt auf.

Unter dem Begriff "korrespondierend" wird vorliegend verstanden, dass ein Öffnungswinkel der Seitenflächen der Nut und ein Öffnungswinkel der Seitenflächen des Trapezkeils gleich groß sind. Entsprechend schließen die Schenkel des trapezförmigen Querschnitts der Nut und Schließen die Schenkel des trapezförmigen Querschnitts des Trapezkeils jeweils den gleichen Winkel ein, wobei bevorzugt die Winkelhalbierende des Winkels radialer Richtung orientiert ist. Mit anderen Worten sind die Schenkel des der Querschnitte jeweils in Bezug auf die radiale Richtung spiegelsymmetrisch orientiert.

Gemäß einer bevorzugten Ausführungsform weisen der Nabenkörper und/oder der Wellenkörper eine Stahllegierung auf. Hierbei hat es sich als vorteilhaft herausgestellt, wenn der Wellenkörper und/oder der Nabenkörper einen nichtrostenden Stahl, bevorzugt einen sogenannten "Edelstahl", beziehungsweise "NiRo- Stahl", beziehungsweise "inox- Stahl" aufweisen.

Gemäß einer weiteren bevorzugten Ausführungsform weist die Passschraube einen Abstützbereich zum zumindest radialen Abstützen gegen den Nabenkörper auf.

Vorzugsweise weist der Abstützbereich hierbei zumindest eine senkrecht zur radialen Richtung angeordnete Abstützfläche auf und optional zusätzlich eine sich in radialer Richtung erstreckende Zylinderwand, vorzugsweise einer Passzylinderbohrung, zum Abstützen in Richtung der Längsachse und optional tangential zur Umfangsrichtung bezogen auf die Längsachse. Über die Zylinderbohrung kann eine Orientierung der Passschraube, mithin von deren Schraubenlängsachse, vorgegeben werden.

Alternativ oder zusätzlich kann der Abstützbereich auch einen konischen Passbereich zum Abstützen gegen eine korrespondierende Konusfläche einer sich im Nabenkörper radial erstreckenden Aufnahme aufweisen. Über den Konus kann eine besonders genaue Zentrierung der Passschraube, insbesondere in radialer Richtung, erfolgen.

Vorzugsweise ist der Abstützbereich ausgebildet, ein Abstützen senkrecht zur radialen Richtung, bevorzugt in Richtung der Längsachse beziehungsweise parallel zur Längsachse, und senkrecht zur Längsachse und zur radialen Richtung, mithin tangential zur Umfangsrichtung bezogen auf die Längsachse bereitzustellen.

Besonders bevorzugt ist es, wenn die Passschraube eine Stahllegierung, bevorzugt eine Duplex-Stahllegierung beziehungsweise Duplex-Edelstahllegierung umfasst.

Vorzugsweise ist eine Materialkombination zwischen der Passschraube und dem Trapezkeil derart ausgebildet, dass ein Fressen zwischen dem Material der Passschraube und dem Material des Trapezkeils vermieden werden kann. Hierbei hat es sich als vorteilhaft herausgestellt, wenn die Materialkombination optional derart gewählt beziehungsweise ausgebildet ist, dass zwischen dem Material der Passschraube und dem Material des Trapezkeils ein Härteunterschied von zumindest 5 HRC oder zumindest 30 HV vorliegt.

Vorzugsweise ist eine Materialkombination zwischen dem Wellenkörper im Bereich der Nut und dem Trapezkeil derart ausgebildet, dass ein Fressen zwischen dem Material des Wellenkörpers und dem Material des Trapezkeils vermieden werden kann. Hierbei hat es sich als vorteilhaft herausgestellt, wenn die Materialkombination optional derart gewählt beziehungsweise ausgebildet ist, dass zwischen dem Material des Wellenkörpers und dem Material des Trapezkeils ein Härteunterschied von zumindest 5 HRC oder zumindest 30 HV vorliegt.

Gemäß einer weiteren bevorzugten Ausführungsform ist zwischen dem Abstützbereich und dem Nabenkörper eine Beilagscheibe, beziehungsweise Passscheibe, vorgesehen.

Alternativ oder zusätzlich kann die Aufnahme eine Lagerbuchse aufweisen, wobei bevorzugt die Lagerbuchse auf ihrer radial inneren Seite eine Konusfläche aufweist, welche bevorzugt die Konusfläche für die Aufnahme ausbildet.

Vorzugsweise ist eine Materialkombination zwischen der Passschraube und der Lagerbuchse derart ausgebildet, dass ein Fressen zwischen dem Material der Passschraube und dem Material der Lagerbuchse vermieden werden kann. Hierbei hat es sich als vorteilhaft herausgestellt, wenn die Materialkombination optional derart gewählt beziehungsweise ausgebildet ist, dass zwischen dem Material der Passschraube und dem Material der Lagerbuchse ein Härteunterschied von zumindest 5 HRC oder zumindest 30 HV vorliegt.

Es hat sich als vorteilhaft herausgestellt, wenn die Beilagscheibe und/oder die Lagerbuchse ein Nichteisenmetall umfassen, bevorzugt ein Weichmetall, besonders bevorzugt Kupfer, Aluminium, Zink, Bronze, oder Messing. Dadurch kann, insbesondere, wenn die Passschraube, der Wellenkörper und/oder der Nabenkörper eine Stahllegierung aufweisen, ein Fressen besonders effektiv vermieden werden.

Weist die Lagerbuchse eines der zuvor beschriebenen Nichteisenmetalle auf, so kann, insbesondere, wenn die Passschraube ein Stahllegierung aufweist, beim Anziehen der Passschraube und einer durch die Konusfläche der Passschraube auf die Lagerbuchse übertragenen, bezogen auf die Schraubenlängsachse radial orientierten Kraft ein Aufweiten der Lagerbuchse in der Aufnahme erzielt werden, sodass ein etwaige zwischen der Lagerbuchse und der Aufnahme vorhandenes Spiel egalisierbar ist.

Gemäß einer weiteren bevorzugten Ausführungsform weist der Trapezkeil ein Nichteisenmetall, bevorzugt ein Weichmetall, besonders bevorzugt Kupfer, Aluminium, Zink, Bronze, oder Messing auf, und/oder weist der Wellenkörper eine Stahllegierung auf.

Gemäß einer weiteren bevorzugten Ausführungsform weist der Trapezkeil einen Passbohrungsabschnitt auf, in welchen ein Zylinderabschnitt der Passschraube eingepasst ist. Dadurch kann die Orientierung der Passschraube und des Trapezkeils zueinander vorgegeben werden. Zudem kann dadurch die Gewindeverbindung zwischen Passschraube und Trapezkeil entlastet werden.

Um zu verhindern, dass Feuchtigkeit in den Innenraum der Aufnahme und weiter in den Bereich zwischen Wellenkörper und Nabenkörper und/oder den Bereich der Nut und des Trapezkeils gelangen kann, kann optional eine Dichtung zwischen der Passschraube und dem Nabenkörper angeordnet sein, wobei bevorzugt die Dichtung im Wesentlichen einen Innenraum der Aufnahme gegen die Umgebung radial außerhalb des Nabenkörpers abdichtet.

Der Nabenkörper weist vorzugsweise einen Anbindungsabschnitt zum Anbinden eines Sternkranzes eines Transportsterns auf, wobei in dem Anbindungsabschnitt bevorzugt eine Mehrzahl von Bohrungen zum Aufnehmen eines Auslegerarms in Umfangsrichtung gleichmäßig voneinander beabstandet angeordnet sind. Hierdurch können ein einfacher Aufbau und eine einfache Fertigung eines Transportsterns erzielt werden.

Gemäß einer weiteren bevorzugten Ausführungsform weist der Nabenkörper einen die Passschraube aufweisenden ersten Nabenteil und einen bezogen auf die Längsachse in Umfangsrichtung relativ zum ersten verdrehbaren, den Anbindungsabschnitt aufweisenden zweiten Nabenteil auf, wobei der erste Nabenteil und der zweite Nabenteil durch zumindest ein Befestigungselement, bevorzugt zumindest eine Schraube, gegen ein Verdrehen zueinander fixiert werden können. Dadurch kann eine Orientierung des Transportsterns in Umfangsrichtung bezogen auf die Längsachse, welche primär durch die Lage der Nut, des Trapezkeils und der Passschraube vorgegeben ist, anpassbar ausgebildet werden. Mit anderen Worten kann durch ein Verdrehen des zweiten Nabenteils relativ zum ersten Nabenteil die Orientierung von am Transportstern angeordneten Vorrichtungen zum Halten eines Behälters in Hinblick auf etwaige Behandlungseinheiten und/oder in Hinblick auf dem Transportstern vorgelagerten und/oder nachgelagerten Transportvorrichtungen synchronisiert werden. Durch das Befestigungselement kann die erwünschte Orientierung fixiert werden.

Vorzugsweise erstreckt sich die zumindest eine Schraube durch ein sich in Umfangsrichtung erstreckendes Langloch am Nabenkörper, wobei durch die Länge des Langlochs in Umfangsrichtung bevorzugt ein maximaler Verdrehwinkel des ersten Nabenteils relativ zum zweiten Nabenteil, und mithin des Nabenkörpers relativ zum Wellenkörper vorgegeben ist.

Um die Höhenposition des Transportsterns verändern zu können, kann die Position des Nabenkörpers in Richtung der Längsachse relativ zum Wellenkörper über eine gegen den Wellenkörper verdrehbare Stellspindel einstellbar sein, wobei bevorzugt die Stellspindel mittels einer Fixiereinheit, bevorzugt umfassend einen Spannhebel, Exzenterhebel und/oder eine Schraube, an dem Wellenkörper fixierbar ist, wobei bevorzugt die Stellspindel mit einem sich in Längsachse am Nabenkörper erstreckenden Gewinde in Eingriff ist.

Die oben gestellte Aufgabe wird weiterhin durch eine Behälterbehandlungsvorrichtung, bevorzugt ein Behältertransportkarussell und/oder ein Füllkarussell oder ein Verschließerkarussell in einer Getränkeabfüllanlage, mit den Merkmalen des Anspruchs 11 gelöst. Vorteilhafte Weiterbildungen ergeben sich aus den Unteransprüchen sowie der vorliegenden Beschreibung und den Figuren.

Entsprechend wird eine Behälterbehandlungsvorrichtung, bevorzugt ein Behältertransportkarussell und/oder ein Füllkarussell oder ein Verschließerkarussell in einer Getränkeabfüllanlage, vorgeschlagen, umfassend ein Grundgestell und einen relativ zum Grundgestell drehbaren, zumindest eine Behälteraufnahmevorrichtung zum Aufnehmen eines Behälters aufweisenden Transportstern. Die Behälterbehandlungsvorrichtung kennzeichnet sich durch eine Vorrichtung zum Höhenverstellen des Transportsterns gemäß einer der vorstehenden Ausführungsformen.

Dadurch, dass die Behälterbehandlungsvorrichtung eine Vorrichtung zum Höhenverstellen des Transportsterns gemäß einem der vorstehenden Ausführungsformen umfasst, können die hinsichtlich der Vorrichtung beschriebenen Vorteile und Wirkungen analog auch durch die Behälterbehandlungsvorrichtung erzielt werden.

Gemäß einer bevorzugten Ausführungsform ist der Wellenkörper mit einer an dem Grundgestell angebrachten Antriebseinheit des Transportsterns verbunden, und der Nabenkörper mit einem die zumindest eine Behälteraufnahmevorrichtung umfassenden Transportkranz beziehungsweise Sternkranz des Transportsterns verbunden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht einer Behälterbehandlungsvorrichtung mit einem höhenverstellbaren Transportstern;
- Figur 2: schematisch eine perspektivische Seitenansicht der Vorrichtung zum Höhenverstellen des Transportsterns aus Figur 1;
- Figur 3: schematisch eine Schnittansicht durch die Vorrichtung aus Figur 2;
- Figur 4: schematisch eine weitere Schnittansicht durch die Vorrichtung aus Figur 2;
- Figur 5: schematisch eine perspektivische Schnittansicht durch die Vorrichtung aus Figur 2; und
- Figur 6: schematisch eine perspektivische Detailansicht der Vorrichtung aus Figur 2.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

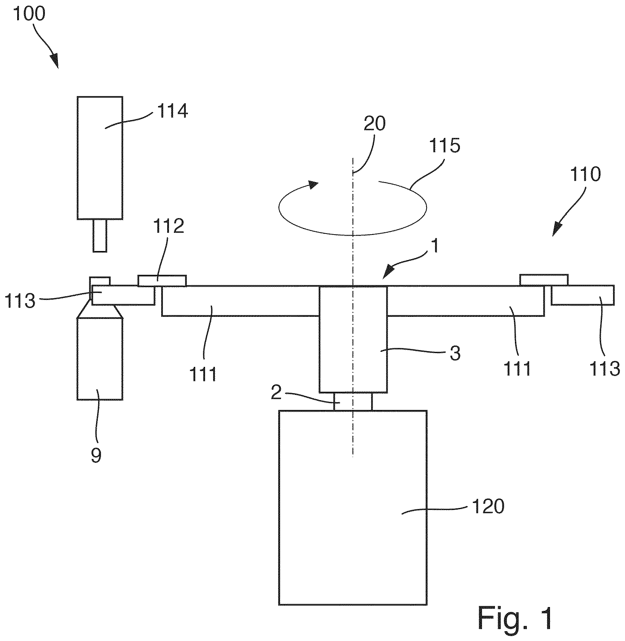

In Figur 1 ist schematisch eine Seitenansicht einer Behälterbehandlungsvorrichtung 100 mit einem höhenverstellbaren Transportstern 110. Die Behälterbehandlungsvorrichtung 100 umfasst ein Grundgestell 120, um welches der Transportstern 110 um eine Längsachse 20 in einer Transportrichtung 115 drehbar ist. Der Transportstern 110 umfasst einen senkrecht zur Längsachse 20 orientierten Transportkranz 112, an welchem in Bezug auf die Längsachse 20 nach radial außen gerichtete Behälteraufnahmevorrichtungen 113 angeordnet sind, welche dazu eingerichtet sind, einen Behälter 9 aufzunehmen und während des Transports durch die Behälterbehandlungsvorrichtung 100 zu halten. Der Transportkranz 112 ist durch eine Mehrzahl von sich in radialer Richtung erstreckender Auslegerarme 111 mit einer zentral angeordneten Vorrichtung 1 zum Höhenverstellen des Transportsterns 110 relativ zum Grundgestell 120 verbunden, wie in Bezug auf die folgenden Figuren näher erläutert.

Die Behälterbehandlungsvorrichtung 100 umfasst ferner eine optionale Behandlungseinheit 114, welche vorliegend als Füllorgan zum Füllen eines Behälters 9 mit einem Füllprodukt ausgebildet ist. Die Behälterbehandlungsvorrichtung 100 ist mithin als Füllerkarussell ausgebildet.

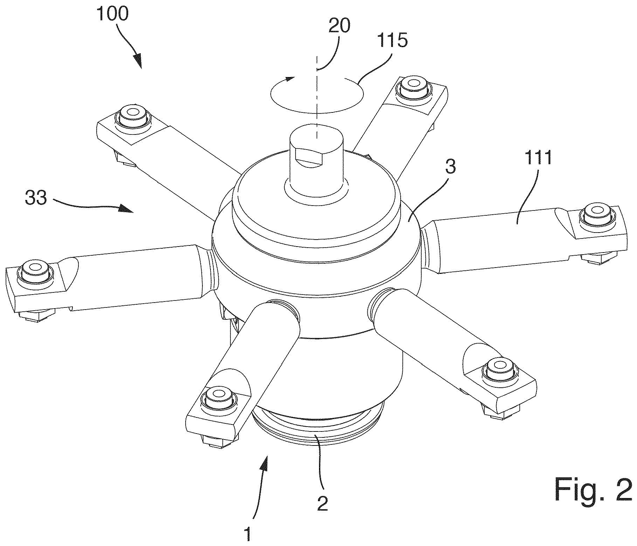

Figur 2 zeigt schematisch eine perspektivische Seitenansicht der Vorrichtung 1 zum Höhenverstellen des Transportsterns aus Figur 1. Die Vorrichtung 1 umfasst einen Wellenkörper 2, welcher vorliegend optional mit einer an dem Grundgestell 120 angebrachten Antriebseinheit (nicht gezeigt) des Transportsterns 110 verbunden ist.

Die Vorrichtung 1 umfasst ferner einen in Bezug auf die Längsachse 20 des Wellenkörper 2 in Umfangsrichtung um den Wellenkörper 2 angeordneten Nabenkörper 3, welcher einen Anbindungsabschnitt 33 umfasst, an welchem die Auslegerarme 111 des Transportsterns 110 an den Nabenkörper 3 angebunden sind.

Der Nabenkörper 3 ist, wie im Detail in Hinblick auf die folgenden Figuren beschrieben, in Bezug auf die Längsachse 20 drehfest an den Wellenkörper 2 angeordnet und ist relativ zum Wellenkörper 2 entlang der Längsachse 20 verschiebbar. Durch die Verschiebbarkeit des Nabenkörpers 3 relativ zum Wellenkörper 2 kann die Höhe des Transportstern 110, mithin die Höhenposition der Behälteraufnahmevorrichtungen 113 verändert werden. Dadurch, dass der Nabenkörper 3 drehfest an den Wellenkörper 2 angeordnet ist, kann eine durch die Antriebseinheit auf den Wellenkörper 2 eingeleitete Drehbewegung über die drehfeste Kopplung zwischen Wellenkörper 2 und Nabenkörper 3 auf den Nabenkörper 3 übertragen werden.

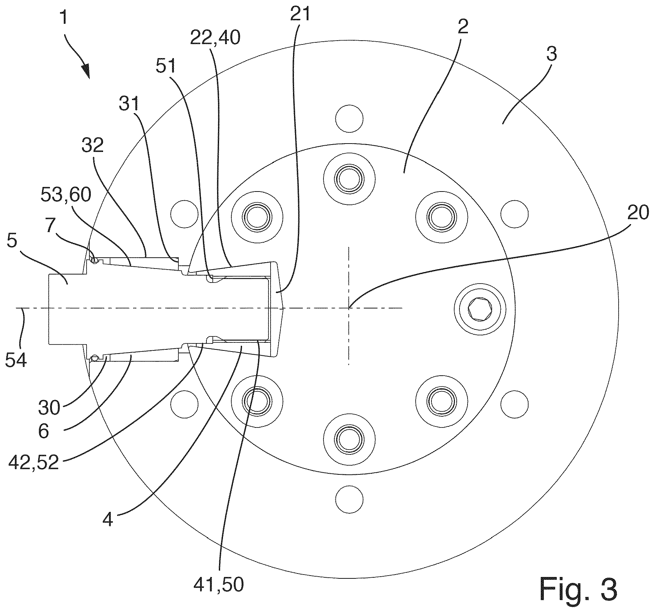

Aus Figur 3 ist schematisch eine Schnittansicht durch die Vorrichtung 1 aus Figur 2 senkrecht zur Längsachse 20 zu entnehmen. Die drehfeste Anordnung zwischen Wellenkörper 2 und Nabenkörper 3 ist dadurch realisiert, dass der Wellenkörper 2 eine sich in Richtung der Längsachse 20 erstreckende Nut 21 umfasst, welche senkrecht zur Längsachse 20 einen sich nach außen verjüngenden trapezförmigen Querschnitt aufweist, und in welcher ein Trapezkeil 4 mit einem zu dem Querschnitt der Nut 21 korrespondierend verjüngenden Querschnitt in Richtung der Längsachse 20 geführt ist, wobei der Trapezkeils 4 gegen die Nut 21 mittels einer sich gegen den Nabenkörper 3 abstützenden Passschraube 5 verspannt ist.

Zum Abstützen gegen den Nabenkörper 3 weist die Passschraube 5 einen konischen Passbereich 53 auf, mittels welchem sie sich gegen korrespondierend ausgebildete Konusfläche 60 einer in einer Aufnahme 30 des Nabenkörpers 3 aufgenommenen Lagerbuchse 6 abstützt. Die Passschraube 5 umfasst ferner einen Gewindeabschnitt 50, mit welchem diese mit einem Gewinde 41 des Trapezkeils 4 in Eingriff ist. Der Gewindeabschnitt 50 und das Gewinde 41 sind vorliegend optional als Feingewinde ausgebildet.

Um den Gewindeabschnitt 50 zu entlasten und um eine vorgegebene Ausrichtung der Passschraube 5 in Bezug auf ihre Schraubenlängsachse 54 hinsichtlich des Trapezkeils 4 zu erzielen, weist die Passschraube 5 einen Zylinderabschnitt 52 auf, welcher in einen entsprechend ausgebildeten Passbohrungsabschnitt 42 eingepasst ist. Der Zylinderabschnitt 52 ist von dem Gewindeabschnitt 50 mittels eines Freischnitts 51 getrennt.

In einem verspannten Zustand wirkt über die Gewindeverbindung zwischen Passschraube 5 und Trapezkeil 4 auf den Trapezkeil 4 in Bezug auf die Längsachse 20 eine nach radial außen gerichtete Kraft, welche bewirkt, dass der Trapezkeil 4 mit seinen gegen die radiale Richtung, welche vorliegend einer Richtung in Schraubenlängsachse 54 entspricht, um einen vorgegebenen Winkel geneigten Seitenflächen 40, welche den Schenkeln des trapezförmigen Querschnitts entsprechend, gegen die korrespondierend orientierten Seitenflächen 22 der Nut gedrückt ist.

Ferner wirkt auf die Passschraube 5 eine in Bezug auf die Längsachse 20 nach radial inneren gerichtete Kraft, welche entgegensetzt der auf den Trapezkeil 4 gerichteten Kraft ist. Die Passschraube 5 stützt sich wie zuvor beschrieben mit ihrem konischen Passbereich 53 an der Konusfläche 60 der Lagerbuchse 6 ab. Die Lagerbuchse 6 wiederum stützt sich an einer radialen Abstützfläche 31 und einer Zylinderwand 32 gegen den Nabenkörper 3 ab, welche zusammen einen Abstützbereich im Nabenkörper 3 für die Passschraube 5 bilden.

Durch die sich nach außen verjüngende, trapezförmige Form der Querschnitte von Trapezkeil 4 und Nut 21 kommt es beim Festziehen der Passschraube 5, welches bevorzugt mit einem vorgegebenen Drehmoment erfolgt, zu einem Zentrieren des Trapezkeils 4 relativ zur Nut 21 beziehungsweise in der Nut 21. Dies wiederum hat zur Folge, dass sich der Wellenkörper 2 und der Nabenkörper 3 zueinander zentrieren. Mit anderen Worten orientiert sich die Längsachse des Nabenkörpers 3 parallel zur Längsachse 20 des Wellenkörpers 2. Folglich sind der Wellenkörper 2 und der Nabenkörper 3 dann synchron zueinander orientiert, sodass der Nabenkörper 3 durch das Lösen und erneute Verspannen der Passschraube 5 beziehungsweise des Trapezkeils 4 in der Nut 21 keinen veränderten Höhenschlag aufweist, beziehungsweise im Wesentlichen den gleichen Planlauf aufweist, wie vor dem Lösen.

Um eine gute Strukturstabilität und vorteilhafte Hygieneeigenschaften der Vorrichtung 1 bereitstellen zu können, umfassen der Wellenkörper 2 und der Nabenkörper 3 jeweils eine Stahllegierung, vorliegend optional einen NiRo-Stahl.

Die Passschraube 5 umfasst einen Duplex-Edelstahl, wodurch sie hochfeste Eigenschaften aufweist.

Die Lagerbuchse 6 ist bevorzugt aus einem Nichteisenmetall ausgebildet, vorliegend aus Messing. Hierdurch liegt eine Materialkombination zwischen Passschraube 5 und Lagerbuchse 6 vor, durch welche aufgrund des hohen Härteunterschieds auf sichere Weise ein Fressen zwischen der Passschraube 5 und der Lagerbuchse 6 beim Festziehen der Passschraube 5 verhindert ist.

Ferner umfasst bevorzugt ebenfalls der Trapezkeil 4 ein Nichteisenmetall, vorliegend ebenfalls Messing. Hierdurch ist ferner ein Fressen zwischen Passschraube 5 und Trapezkeil 4, und zwischen dem Trapezkeil 4 und der Nut 21, mithin dem Wellenkörper 2, verhindert.

Die Passschraube 5 umfasst ferner eine Dichtung 7, vorliegend optional in Form eines O-Rings, mittels welcher der Innenraum der Aufnahme 30 gegen die Umgebung abgedichtet ist. Dadurch ist der Innenraum vor einem Flüssigkeitseintritt bei einer Reinigung sowie vor einem Eintritt von Produktresten geschützt.

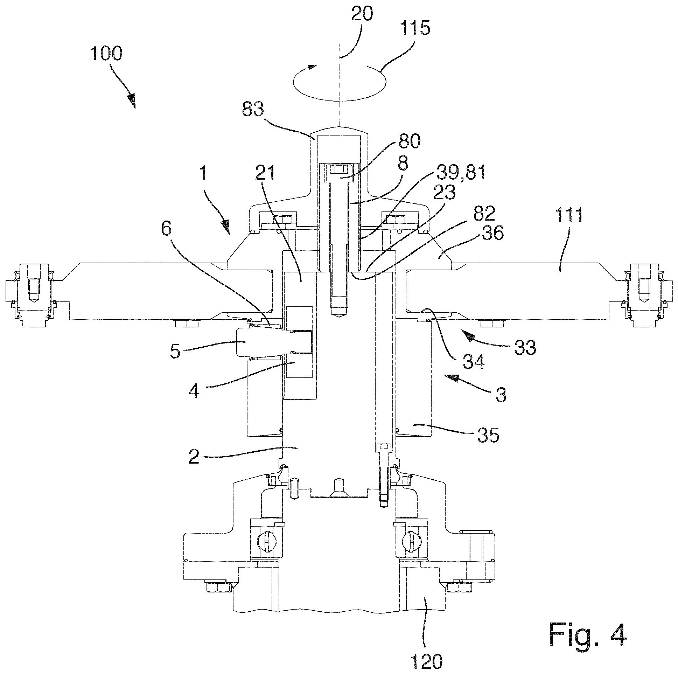

In Figur 4 ist schematisch eine weitere Schnittansicht durch die Vorrichtung 1 aus Figur 2 senkrecht zur Schnittansicht aus Figur 3 gezeigt, in welcher zu erkennen ist, dass die Nut 21 in Richtung der Längsachse 20 eine größere Erstreckung aufweist als der Trapezkeil 4 in Richtung der Längsachse 20. Infolgedessen kann der Nabenkörper 3, wenn die Verspannung zwischen Passschraube 5 und Trapezkeil 4 gelöst ist, in Richtung der Längsachse 20 gegenüber den Wellenkörper 2 verschoben werden, um so die Höhe des Transportsterns 110 (siehe Figur 1) verändern zu können.

Um das Höhenverstellen des Nabenkörpers 3 relativ zum Wellenkörper 2 zu ermöglichen, umfasst die Vorrichtung 1 ferner eine gegenüber den Wellenkörper 2 verdrehbare Stellspindel 8. Die Stellspindel 8 weist ein Außengewinde 81 auf, welches mit einem in Längsrichtung 20 am Nabenkörper 3 orientierten Gewinde 39 in Eingriff ist. Um ein ungewolltes Drehen der Stellspindel 8 während des Betriebs zu unterbinden, ist die Stellspindel mit einer Schraube 80 gegen den Wellenkörper 2 verspannt, indem die Schraube 80 die Stellspindel 8 an einer Stirnseite 82 der Stellspindel 8 gegen eine Stirnseite 23 des Wellenkörpers 2 drückt.

Ein Höhenverstellen des Nabenkörpers 3 relativ zum Wellenkörper 2 kann grundsätzlich nach dem folgenden Verfahren ausgeführt werden:
Nach einem Abheben einer Abdeckung 83 der Stellspindel sind zunächst die Schraube 80 und die Passschraube 5 jeweils aus ihrem verspannten Zustand zu lösen. Durch das Lösen der Verspannung der Passschraube 5 ist wie oben beschrieben der Nabenkörper 3 grundsätzlich in Richtung der Längsachse 20 relativ zum Wellenkörper 2 verschiebbar. Durch das Lösen der Verspannung der Schraube 80 kann die Stellspindel 8 um ihre Längsachse, welche vorliegend der Längsachse 20 entspricht, verdreht werden.

Durch ein Verdrehen der Stellspindel 8 ändert sich die die Position des Nabenkörpers 3 relativ zum Wellenkörper 2, da sich die Stellspindel 8 mit ihrer Stirnseite 3 an den Wellenkörper 2 abstützt, sowie da der Nabenkörper 3 zum einen mit seinem Gewinde 39 mit dem Außengewinde 81 der Stellspindel 8 in Eingriff steht und zum anderen über die Passschraube 5 und den Trapezkeil 4 drehfest gegenüber den Wellenkörper 2 angeordnet ist. Die Stellspindel 8 ist nun so lange zu verdrehen, bis der Nabenkörper 3 und dadurch entsprechend der Transportstern 110 sich in der gewünschten, neuen Höhenposition befindet.

Anschließend ist zunächst die Passschraube 5 anzuziehen, wodurch sich der Nabenkörper 3 relativ zum Wellenkörper 2 ausgerichtet, mithin die Längsachse des Nabenkörpers 3 parallel zur Längsachse 20 orientiert ist. Nun ist optional zum Bereitstellen einer zusätzlichen Sicherheit noch die Schraube 80 zu verspannen.

Anders als bei Vorrichtungen mit Spannsatz ist durch die Vorrichtung 1 via der durch die Passschraube 5 und den Trapezkeil 4 in Verbindung mit der Aufnahme 30 und der Nut 21 ausgebildete Verbindung in Sinne einer Passfedereinheit die Orientierung des Nabenkörpers 3 relativ zum Wellenkörper 2 in Umfangsrichtung vorgegeben. Entsprechend ist ein Verdrehen des Nabenkörpers 3 relativ zum Wellenkörper 2 auch im gelösten Zustand der Passschraube 5 nicht möglich. Um dieser Tatsache Rechnung zu tragen, ist, wie ferner aus Figur 4 zu entnehmen, der Nabenkörper 3 zweiteilig ausgebildet. Er umfasst einen die Aufnahme 30 der Passschraube 5 aufweisenden ersten Nabenteil 35 und einen bezogen auf die Längsachse 20 in Umfangsrichtung relativ zum ersten Nabenteil 35 verdrehbaren zweiten Nabenteil 36, welcher den Anbindungsabschnitt 33 für die Auslegerarme 111 umfasst. Der Anbindungsabschnitt 33 ist hierbei durch eine Mehrzahl von Bohrungen 34, in welche jeweils ein Auslegerarm 111 eingesteckt ist, ausgebildet.

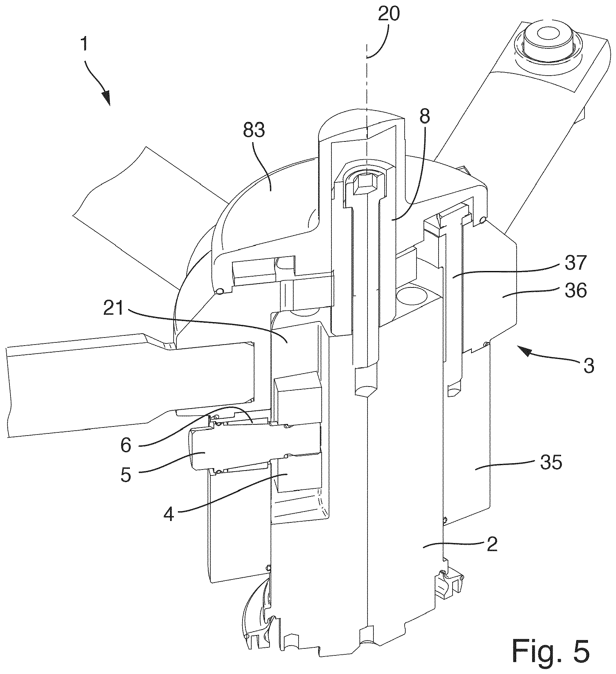

Wie aus Figur 5 zu entnehmen, welche schematisch eine perspektivische Schnittansicht durch die Vorrichtung 1 aus Figur 2 zeigt, ist der zweite Nabenteil 36 durch ein Befestigungselement in Form einer Schraube 37 mit dem ersten Nabenteil 35 verspannt, sodass ein Verdrehen des zweiten Nabenteils 36 relativ zum ersten Nabenteil verhindert ist.

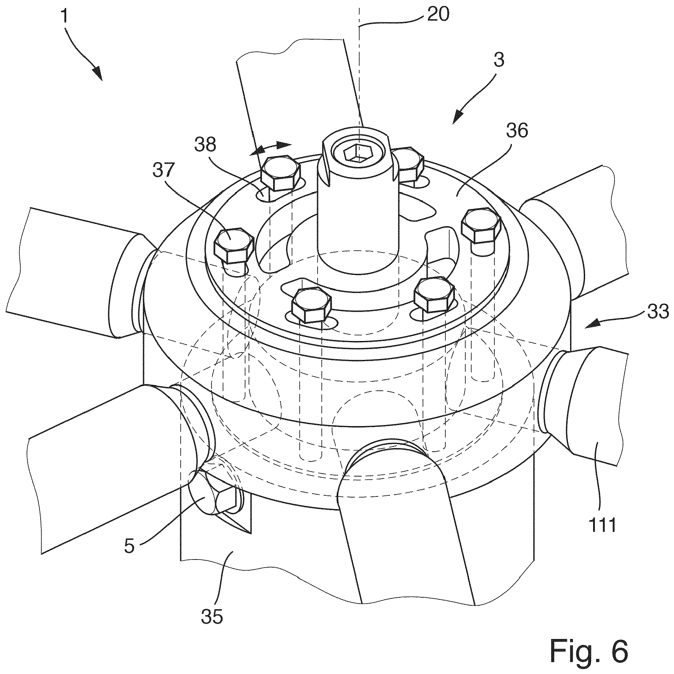

Figur 6 zeigt schematisch eine perspektivische Detailansicht der Vorrichtung 1 aus Figur 2. zu erkennen ist, dass der zweite Nabenteil 36 am ersten Nabenteil 35 mit einer Mehrzahl von Schrauben 37 befestigt ist, sodass über den via der Schrauben 37 bereitgestellten Kraftschluss zwischen dem ersten Nabenteil 35 und dem zweiten Nabenteil 36 ein Drehmoment sicher übertragbar ist.

Die Schrauben 37 erstrecken sich jeweils durch ein sich in Umfangsrichtung erstreckendes Langloch 38 am zweiten Nabenteil 36. Die Länge der Langlöcher 38 in Umfangsrichtung gibt dabei einen maximalen Verdrehwinkel des zweiten Nabenteils 36 relativ zum ersten Nabenteil 35 vor. Durch ein Lösen der Verspannung der Schrauben 37 kann der zweite Nabenteil 36 mithin innerhalb der durch die Langlöcher 38 vorgegebenen Grenzen um die Längsachse 20 verschwenkt werden. Hierdurch kann die Orientierung des Transportsterns 110 in Umfangsrichtung in Bezug auf die Längsachse 20 in Hinblick auf weitere Bestandteile der Behälterbehandlungsvorrichtung 100, sowie auf weitere Bestandteile einer die Behälterbehandlungsvorrichtung 100 umfassenden Anlage, beispielsweise einem Zulaufstern zum Zuführen von Behältern 9 an den Transportstern 110, synchronisiert werden.

Dadurch ist es nicht erforderlich, eine aufwändige Synchronisierung des Transportsterns 110 in Hinblick auf die vorgenannten Bestandteile durchzuführen, indem der Antrieb des Transportsterns 110 angesteuert wird, was ansonsten im Gegensatz zu herkömmlichen Vorrichtungen, welche einen Spannsatz verwenden, erforderlich wäre.

Soweit anwendbar, können alle einzelnen Merkmale, die in den Ausführungsbeispielen dargestellt sind, miteinander kombiniert und/oder ausgetauscht werden, ohne den Bereich der Erfindung, so wie in den beiliegenden Ansprüchen definiert zu verlassen.

### Bezugszeichenliste

- 1: Vorrichtung

- 2: Wellenkörper
- 20: Längsachse
- 21: Nut
- 22: Seitenfläche
- 23: Stirnseite

- 3: Nabenkörper
- 30: Aufnahme
- 31: Abstützfläche
- 32: Zylinderwand
- 33: Anbindungsabschnitt
- 34: Bohrung
- 35: erster Nabenteil
- 36: Zweiter Nabenteil
- 37: Schraube
- 38: Langloch
- 39: Gewinde

- 4: Trapezkeil
- 40: Seitenfläche
- 41: Gewinde
- 42: Passbohrungsabschnitt

- 5: Passschraube
- 50: Gewindeabschnitt
- 51: Freischnitt
- 52: Zylinderabschnitt
- 53: Konischer Passbereich
- 54: Schraubenlängsachse

- 6: Lagerbuchse
- 60: Konusfläche

- 7: Dichtung

- 8: Stellspindel
- 80: Schraube
- 81: Außengewinde
- 82: Stirnseite
- 83: Abdeckung

- 9: Behälter

- 100: Behälterbehandlungsvorrichtung
- 110: Transferstern
- 111: Auslegerarm
- 112: Transportkranz
- 113: Behälteraufnahmevorrichtung
- 114: Behandlungseinheit
- 115: Transportrichtung
- 120: Grundgestell

## Patentansprüche

1. Vorrichtung (1) zum Höhenverstellen eines Transportsterns (110), bevorzugt eines Transportsterns (110) eines Füllerkarussells oder eines Verschließerkarussells in einer Getränkeabfüllanlage, umfassend einen Wellenkörper (2) und einen in Umfangsrichtung (3) um den Wellenkörper (2) angeordneten Nabenkörper (3), wobei der Wellenkörper (2) und der Nabenkörper (3) zum Höhenverstellen relativ zueinander entlang einer Längsachse (20) des Wellenkörpers (2) verschiebbar sind,
**dadurch gekennzeichnet, dass**
der Wellenkörper (2) eine sich in Richtung der Längsachse (20) erstreckende Nut (21) umfasst, welche senkrecht zur Längsachse (20) einen sich nach außen verjüngenden trapezförmigen Querschnitt aufweist, und in welcher ein Trapezkeil (4) mit einem dazu korrespondierend verjüngenden Querschnitt in Richtung der Längsachse (20) geführt ist, und wobei der Trapezkeil (4) gegen die Nut (21) mittels einer sich gegen den Nabenkörper (3) abstützenden Passschraube (5) verspannbar ist.

2. Vorrichtung (1) gemäß Anspruch 1, **dadurch gekennzeichnet, dass** die Passschraube (5) einen Abstützbereich zum Abstützen gegen den Nabenkörper (3) aufweist, wobei der Abstützbereich bevorzugt eine senkrecht zur radialen Richtung angeordnete Abstützfläche oder einen konischen Passbereich (53) zum Abstützen gegen eine korrespondierende Konusfläche (60) einer sich im Nabenkörper (3) radial erstreckenden Aufnahme (30) aufweist, und/oder **dass** die Passschraube (5) eine Stahllegierung, bevorzugt eine Duplex-Stahllegierung umfasst.

3. Vorrichtung (1) gemäß dem vorstehenden Anspruch, **dadurch gekennzeichnet, dass** zwischen dem Abstützbereich und dem Nabenkörper (3) eine Beilagscheibe vorgesehen ist, oder die Aufnahme (30) eine Lagerbuchse (6) aufweist, wobei bevorzugt die Lagerbuchse (6) auf ihrer radial inneren Seite die Konusfläche (60) aufweist, wobei die Beilagscheibe und/oder die Lagerbuchse (6) bevorzugt ein Nichteisenmetall, bevorzugt ein Weichmetall, besonders bevorzugt Kupfer, Aluminium, Zink, Bronze, oder Messing aufweist.

4. Vorrichtung (1) gemäß einem der vorstehenden Ansprüche, **dadurch gekennzeichnet, dass** der Trapezkeil (4) ein Nichteisenmetall, bevorzugt ein Weichmetall, besonders bevorzugt Kupfer, Aluminium, Zink, Bronze, oder Messing aufweist, und/oder **dass** der Wellenkörper (2) eine Stahllegierung umfasst.

5. Vorrichtung (1) gemäß einem der vorstehenden Ansprüche, **dadurch gekennzeichnet, dass** der Trapezkeil (4) einen Passbohrungsabschnitt (42) aufweist, in welchen ein Zylinderabschnitt (52) der Passschraube (5) eingepasst ist.

6. Vorrichtung (1) gemäß einem der vorstehenden Ansprüche, **dadurch gekennzeichnet, dass** eine Dichtung (7) zwischen der Passschraube (5) und dem Nabenkörper (3) angeordnet ist, wobei bevorzugt die Dichtung (7) im Wesentlichen einen Innenraum der Aufnahme (30) gegen die Umgebung radial außerhalb des Nabenkörpers (3) abdichtet.

7. Vorrichtung (1) gemäß einem der vorstehenden Ansprüche, **dadurch gekennzeichnet, dass** der Nabenkörper (3) einen Anbindungsabschnitt (33) zum Anbinden eines Sternkranzes aufweist, wobei in dem Anbindungsabschnitt (33) bevorzugt eine Mehrzahl von Bohrungen (34) zum Aufnehmen eines Auslegerarms (111) in Umfangsrichtung gleichmäßig voneinander beabstandet angeordnet sind.

8. Vorrichtung (1) gemäß dem vorstehenden Anspruch, **dadurch gekennzeichnet, dass** der Nabenkörper (3) einen die Passschraube (5) aufweisenden ersten Nabenteil (35) und einen bezogen auf die Längsachse (20) in Umfangsrichtung relativ zum ersten Nabenteil (35) verdrehbaren, den Anbindungsabschnitt (33) aufweisenden zweiten Nabenteil (36) aufweist, wobei der erste Nabenteil (35) und der zweite Nabenteil (36) durch zumindest ein Befestigungselement, bevorzugt zumindest einer Schraube (37) gegen ein Verdrehen zueinander fixiert werden können.

9. Vorrichtung (1) gemäß dem vorstehenden Anspruch, **dadurch gekennzeichnet, dass** die zumindest eine Schraube (37) sich durch ein sich in Umfangsrichtung erstreckendes Langloch (38) am Nabenkörper (3) erstreckt, wobei durch die Länge des Langlochs (38) in Umfangsrichtung bevorzugt ein maximaler Verdrehwinkel des ersten Nabenteils (35) relativ zum zweiten Nabenteil (36) vorgegeben ist.

10. Vorrichtung (1) gemäß einem der vorstehenden Ansprüche, **dadurch gekennzeichnet, dass** die Position des Nabenkörpers (3) in Richtung der Längsachse (20) relativ zum Wellenkörper (2) über eine gegen den Wellenkörper (2) verdrehbare Stellspindel (8) einstellbar ist, wobei bevorzugt die Stellspindel (8) mittels einer Fixiereinheit, bevorzugt umfassend einen Spannhebel, Exzenterhebel und/oder eine Schraube (80) , an dem Wellenkörper (2) fixierbar ist, wobei bevorzugt die Stellspindel (8) mit einem sich in Längsachse (20) am Nabenkörper (2) erstreckenden Gewinde (39) in Eingriff ist.

11. Behälterbehandlungsvorrichtung (100), bevorzugt ein Behältertransportkarussell und/oder ein Füllkarussell oder ein Verschließerkarussell in einer Getränkeabfüllanlage, umfassend ein Grundgestell (120) und einen relativ zum Grundgestell (120) drehbaren, zumindest eine Behälteraufnahmevorrichtung (113) zum Aufnehmen eines Behälters (9) aufweisenden Transportstern (120),
**dadurch gekennzeichnet, dass**
eine Vorrichtung (1) zum Höhenverstellen des Transportsterns (110) gemäß einem der vorstehenden Ansprüche vorgesehen ist.

12. Behälterbehandlungsvorrichtung (100) gemäß dem vorstehenden Anspruch, **dadurch gekennzeichnet, dass** der Wellenkörper (2) mit einer an dem Grundgestell (120) angebrachten Antriebseinheit des Transportsterns (110) verbunden ist, und der Nabenkörper (3) mit einem die zumindest eine Behälteraufnahmevorrichtung (113) umfassenden Transportkranz (112) des Transportsterns (110) verbunden ist.

## Claims

1. Device (1) for adjusting the height of a transport star (110), preferably a transport star (110) of a filler carousel or a closure carousel in a beverage filling plant, comprising a shaft body (2) and a hub body (3) arranged circumferentially around the shaft body (2), wherein the shaft body (2) and the hub body (3) are displaceable relative to one another along a longitudinal axis (20) of the shaft body (2) for height adjustment,
**characterised in that**
the shaft body (2) comprises a groove (21) that extends in the direction of the longitudinal axis (20) and has an outwardly tapering trapezoidal cross-section perpendicular to the longitudinal axis (20), and in which a trapezoidal wedge (4) with a correspondingly tapering cross-section is guided in the direction of the longitudinal axis (20), and wherein the trapezoidal wedge (4) can be braced against the groove (21) by means of a fitting bolt (5) supported against the hub body (3).

2. Device (1) according to claim 1, **characterised in that** the fitting bolt (5) has a supporting region for supporting against the hub body (3), the supporting region preferably having a supporting surface arranged perpendicular to the radial direction or a conical fitting region (53) for supporting against a corresponding conical surface (60) of a receptacle (30) extending radially in the hub body (3), and/or **in that** the fitting bolt (5) comprises a steel alloy, preferably a duplex steel alloy.

3. Device (1) according to the preceding claim, **characterised in that** a washer is provided between the supporting region and the hub body (3), or the receptacle (30) has a bearing bush (6), the bearing bush (6) preferably having the conical surface (60) on its radially inner side, the washer and/or the bearing bush (6) preferably having a non-ferrous metal, preferably a soft metal, particularly preferably copper, aluminium, zinc, bronze, or brass.

4. Device (1) according to any one of the preceding claims, **characterised in that** the trapezoidal wedge (4) comprises a non-ferrous metal, preferably a soft metal, particularly preferably copper, aluminium, zinc, bronze, or brass, and/or **in that** the shaft body (2) comprises a steel alloy.

5. Device (1) according to any one of the preceding claims, **characterised in that** the trapezoidal wedge (4) has a fitting bore portion (42) into which a cylindrical portion (52) of the fitting bolt (5) is fitted.

6. Device (1) according to any one of the preceding claims, **characterised in that** a seal (7) is arranged between the fitting bolt (5) and the hub body (3), the seal (7) preferably substantially sealing an inner space of the receptacle (30) against the environment radially outside the hub body (3).

7. Device (1) according to any one of the preceding claims, **characterised in that** the hub body (3) has a connection portion (33) for connecting a star rim, in which connection portion (33) a plurality of bores (34) for receiving a cantilever arm (111) and evenly spaced from each other in the circumferential direction are preferably arranged.

8. Device (1) according to the preceding claim, **characterised in that** the hub body (3) has a first hub part (35) having the fitting bolt (5) and a second hub part (36) that is rotatable relative to the first hub part (35) in the circumferential direction with respect to the longitudinal axis (20) and has the connection portion (33), wherein the first hub part (35) and the second hub part (36) can be fixed against rotation relative to one another by at least one fastening element, preferably at least one bolt (37).

9. Device (1) according to the preceding claim, **characterised in that** the at least one bolt (37) extends through a slot (38) extending in the circumferential direction on the hub body (3), the length of the slot (38) in the circumferential direction preferably determining a maximum angle of rotation of the first hub part (35) relative to the second hub part (36).

10. Device (1) according to any one of the preceding claims, **characterised in that** the position of the hub body (3) in the direction of the longitudinal axis (20) relative to the shaft body (2) can be set by means of an adjusting spindle (8) which is rotatable against the shaft body (2), wherein preferably the adjusting spindle (8) can be fixed to the shaft body (2) by means of a fixing unit, preferably comprising a clamping lever, eccentric lever and/or a bolt (80), wherein preferably the adjusting spindle (8) is engaged with a thread (39) extending in the longitudinal axis (20) on the hub body (3).

11. Container processing device (100), preferably a container transport carousel and/or a filling carousel or a closure carousel in a beverage filling plant, comprising a base frame (120) and a transport star (110) that is rotatable relative to the base frame (120) and has at least one container receiving device (113) for receiving a container (9),
**characterised in that**
there is provided a device (1) for adjusting the height of the transport star (110) according to any one of the preceding claims.

12. Container processing device (100) according to the preceding claim, **characterised in that** the shaft body (2) is connected to a drive unit of the transport star (110) mounted on the base frame (120), and the hub body (3) is connected to a transport rim (112) of the transport star (110) comprising the at least one container receiving device (113).

## Revendications

1. Dispositif (1) pour le réglage en hauteur d'une étoile de transport (110), de préférence d'une étoile de transport (110) d'un carrousel de remplisseuse ou d'un carrousel de capsuleuse dans une installation de remplissage de boissons, comprenant un corps d'arbre (2) et un corps de moyeu (3) agencé dans le sens périphérique autour du corps d'arbre (2), dans lequel le corps d'arbre (2) et le corps de moyeu (3) sont coulissants pour le réglage en hauteur l'un par rapport à l'autre le long d'un axe longitudinal (20) du corps d'arbre (2),
**caractérisé en ce que**
le corps d'arbre (2) comporte une rainure (21) s'étendant en direction de l'axe longitudinal (20) qui présente perpendiculairement à l'axe longitudinal (20) une section transversale trapézoïdale se rétrécissant vers l'extérieur, et dans laquelle un coin trapézoïdal (4) est guidé avec une section transversale se rétrécissant de manière correspondante en direction de l'axe longitudinal (20), et dans lequel le coin trapézoïdal (4) est serrable contre la rainure (21) au moyen d'une vis d'ajustage (5) s'appuyant contre le corps de moyeu (3).

2. Dispositif (1) selon la revendication 1, **caractérisé en ce que** la vis d'ajustage (5) présente une zone d'appui pour l'appui contre le corps de moyeu (3), dans lequel la zone d'appui présente de préférence une surface d'appui agencée perpendiculairement au sens radial ou une zone d'ajustage (53) conique pour l'appui contre une surface conique (60) correspondante d'un logement (30) s'étendant radialement dans le corps de moyeu (3), et/ou que la vis d'ajustage (5) comporte un alliage d'acier, de préférence un alliage d'acier duplex.

3. Dispositif (1) selon la revendication précédente, **caractérisé en ce qu'**une cale d'épaisseur est prévue entre la zone d'appui et le corps de moyeu (3), ou le logement (30) présente une douille de palier (6), dans lequel de préférence la douille de palier (6) présente sur son côté radialement intérieur la surface conique (60), dans lequel la cale d'épaisseur et/ou la douille de palier (6) présente de préférence un métal non ferreux, de préférence un métal doux, le plus préférentiellement du cuivre, de l'aluminium, du zinc, du bronze ou du laiton.

4. Dispositif (1) selon l'une quelconque des revendications précédentes, **caractérisé en ce que** le coin trapézoïdal (4) présente un métal non ferreux, de préférence un métal doux, le plus préférentiellement du cuivre, de l'aluminium, du zinc, du bronze ou du laiton, et/ou que le corps d'arbre (2) comporte un alliage d'acier.

5. Dispositif (1) selon l'une quelconque des revendications précédentes, **caractérisé en ce que** le coin trapézoïdal (4) présente une section de perçage d'ajustage (42), dans laquelle une section de cylindre (52) de la vis d'ajustage (5) est emboîtée.

6. Dispositif (1) selon l'une quelconque des revendications précédentes, **caractérisé en ce qu'**un joint d'étanchéité (7) est agencé entre la vis d'ajustage (5) et le corps de moyeu (3), dans lequel le joint d'étanchéité (7) rend de préférence étanche sensiblement un espace intérieur du logement (30) contre l'environnement radialement en dehors du corps de moyeu (3).

7. Dispositif (1) selon l'une quelconque des revendications précédentes, **caractérisé en ce que** le corps de moyeu (3) présente une section de liaison (33) pour la liaison d'une couronne d'étoile, dans lequel dans la section de liaison (33), une pluralité de perçages (34) sont de préférence agencés à distance uniformément les uns des autres pour la réception d'un bras en porte-à-faux (111) dans le sens périphérique.

8. Dispositif (1) selon la revendication précédente, **caractérisé en ce que** le corps de moyeu (3) présente une première partie de moyeu (35) présentant la vis d'ajustage (5) et une seconde partie de moyeu (36) présentant la section de liaison (33), rotative par rapport à l'axe longitudinal (20) dans le sens périphérique par rapport à la première partie de moyeu (35), dans lequel la première partie de moyeu (35) et la seconde partie de moyeu (36) peuvent être fixées l'une à l'autre par au moins un élément de fixation, de préférence au moins une vis (37) contre une rotation.

9. Dispositif (1) selon la revendication précédente, **caractérisé en ce que** l'au moins une vis (37) s'étend par un trou oblong (38) s'étendant dans le sens périphérique au niveau du corps de moyeu (3), dans lequel un angle de rotation maximal de la première partie de moyeu (35) est de préférence prédéfini par rapport à la seconde partie de moyeu (36) par la longueur du trou oblong (38) dans le sens périphérique.

10. Dispositif (1) selon l'une quelconque des revendications précédentes, **caractérisé en ce que** la position du corps de moyeu (3) est réglable en direction de l'axe longitudinal (20) par rapport au corps d'arbre (2) par le biais d'une broche de réglage (8) rotative contre le corps d'arbre (2), dans lequel la broche de réglage (8) peut de préférence être fixée au moyen d'une unité de fixation, de préférence comprenant un levier de serrage, un levier excentrique et/ou une vis (80), peut être fixée au corps d'arbre (2), dans lequel de préférence, la broche de réglage (8) est en prise avec un filet (39) s'étendant dans l'axe longitudinal (20) au niveau du corps de moyeu (3).

11. Dispositif de traitement de récipient (100), de préférence un carrousel de transport de récipient et/ou un carrousel de remplissage ou un carrousel de capsuleuse dans une installation de remplissage de boissons, comprenant un bâti de base (120) et une étoile de transport (110) rotative par rapport au bâti de base (120), présentant au moins un dispositif de réception de récipient (113) pour la réception d'un récipient (9),
**caractérisé en ce que**
un dispositif (1) est prévu pour le réglage en hauteur de l'étoile de transport (110) selon l'une quelconque des revendications précédentes.

12. Dispositif de traitement de récipient (100) selon la revendication précédente, **caractérisé en ce que** le corps d'arbre (2) est relié à une unité d'entraînement montée au niveau du bâti de base (120) de l'étoile de transport (110), et le corps de moyeu (3) est relié à une couronne de transport (112) comprenant l'au moins un dispositif de réception de récipient (113) de l'étoile de transport (110).
